# EUROPEAN PATENT APPLICATION

(11) **EP 1 146 743 A1**
(43) Date of publication of application: **17.10.2001**
(21) Application number: 00311667.0
(22) Date of filing: 22.12.2000
(51) Int. Cl.: H04N 7/24, H04N 5/232

(54) **Method and apparatus for transmitting a video image**

(30) Priority: 23.12.1999 GB 9930518
(71) Applicant: Mitsubishi Electric Information Technology Centre Europe B.V., Guildford, Surrey GU2 5YD (GB)
(72) Inventor: Bober, Miroslaw, Surrey GU1 2SE (GB); Ratliff, Paul A, Surrey SM5 4AG (GB)
(74) Representative: Burke, Steven David

(57) **Abstract**

A method of transmitting a video image including an object of interest comprises capturing a sequence of images in which the object of interest occupies a fraction of each image, tracking the object of interest by selecting and extracting a region of each image including the object of interest, and coding only the selected region of each captured image.

## Description

The invention relates to a method and apparatus for transmitting a video image. More particularly, the invention relates to transmission of a video image including an object of interest, such as a face in communications using a mobile video-phone.

In mobile video communication, often the video camera is hand-held and moves relative to the subject. That is particularly the case, for example, in mobile phone based video communication, where the user has to direct a camera linked to the phone handset to point to his own face. This can cause the problem that, because of head and hand movements, the outline of the user's face moves within the frame of the image captured by the camera, possibly even moving outside the frame. One solution for preventing the outline of the head from moving outside the frame is to adjust the focal length of the camera so that the outline of the head occupies a relatively small fraction of the frame. As a result, the probability that the head stays within the frame of the image is increased. However, the resolution of the face image is decreased and so the quality of the video-link is perceived to be poor.

US 4,951,140 discloses a device for encoding image data including a face, where the face region is detected and more bits are allocated to the extracted face region than to the rest of the image. to achieve a better quality image of the face region.

According to a first aspect, the invention provides a method of transmitting a video image including an object of interest comprising capturing a sequence of images in which the object of interest occupies a fraction of each image, tracking the object of interest by selecting and extracting a region of each image including the object of interest, and coding only the selected region of each captured image.

By arranging that the object of interest occupies a small fraction of the image, the probability that the object of interest stays within the frame of the captured image is increased. At the same time the object of interest occupies a relatively high fraction of the region that is coded. As a result of the invention, the amount of data to be coded is reduced. Even if the object of interest moves around within the frame of the captured image, the extracted region follows the object, so that the object moves less within the extracted region. Preferably, the object of interest is centred in the extracted region, so that the object is stable within the extracted regions.

Preferably, the extracted region is displayed at a resolution lower than the resolution of the captured image. Because the object of interest occupies a relatively large proportion of the terminal display, the user perceives that the quality of the image is improved.

According to a second aspect, the invention provides a method of transmitting a video image including an object of interest comprising selecting a region of an image including the object of interest, the selected region being of a predetermined size, and coding the selected region.

As above, the object of interest occupies a relatively high fraction of the region that is coded.

Preferably, only the selected region is coded and the rest of the captured image is discarded. As a result, the amount of information to be coded and transmitted is reduced. Preferably, the selected region corresponds to a predetermined image format having fewer pixels than the capture image of the camera. Consequently, the selected region can be coded and displayed using known coders and displayed for the known image format without further processing to adapt the extracted region to the specific format. This reduces the amount of processing required.

According to a third aspect, the invention provides a method of transmitting a video image including an object of interest comprising selecting a region of the image greater than the object of interest by a predetermined degree, and coding said region.

The third aspect of the invention offers advantages similar to those of the first and the second aspect. Also, more specifically, the size of the selected region varies with the size of the object within the image (which changes for example as the object moves relatively towards or away from the camera) so that the ratio of object data to background data stays approximately the same.

According to a fourth aspect, the invention provides a method of operating a video camera comprising arranging the camera so that an object of interest occupies a fraction of the area of the captured image, tracking movement of the object of interest within the captured image, selecting and extracting a region of interest around the object of interest and displaying only the extracted part of the captured image.

As a result of the invention, it is easier to keep the face of the user within the image captured by the camera while also maintaining a high quality displayed image at the receiving terminal. Also, the amount of information to be coded may be reduced compared with the prior art. Also, effects of the invention can be obtained using certain standard components such as standard encoders.

Embodiments of the invention will be described with reference to the accompanying drawings of which:
Fig. 1 is a block diagram of a mobile video communication system;
Fig. 2 is a block diagram showing the image processing circuit of Fig. 1 in more detail;
Fig. 3 is a block diagram of an image processing circuit in a second embodiment;
Fig. 4 is a block diagram of an image processing circuit in a third embodiment.

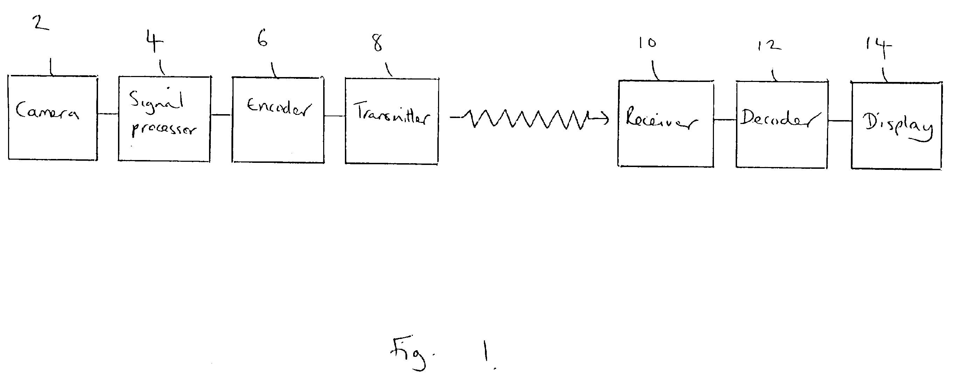

An example of an application of the present invention is a mobile video phone communication system. Components of such a system are shown in block diagram form in Fig. 1.

A mobile phone (not shown) includes a camera 2 for capturing images of the user. The camera 2 is a known type of camera for use in mobile video phones and is part of the phone handset. In an alternative embodiment, the camera is a separate component connected to the phone handset, for example, by a lead or by wireless communication. The camera digitises images at CIF resolution (352x288 pixels). The optical system of the camera is chosen so that in use the face of the user occupies approximately a predetermined fraction of the target image resolution, which is the resolution of the display 14. Here, the resolution of the display corresponds to QCIF format (176x144 pixels). In this embodiment, the optical system is configured so that in normal use the face occupies approximately 80 % of the target resolution. Of course, the actual fraction of the image occupied by the face of the user will in use depend on various factors, such as the size of the face of the user and where the camera is actually held. Accordingly, the configuration of the camera including the focal length of the optical system is determined on the basis of statistical information representing, amongst other things, the average size of people's faces and what is considered a comfortable distance from the face for holding the camera.

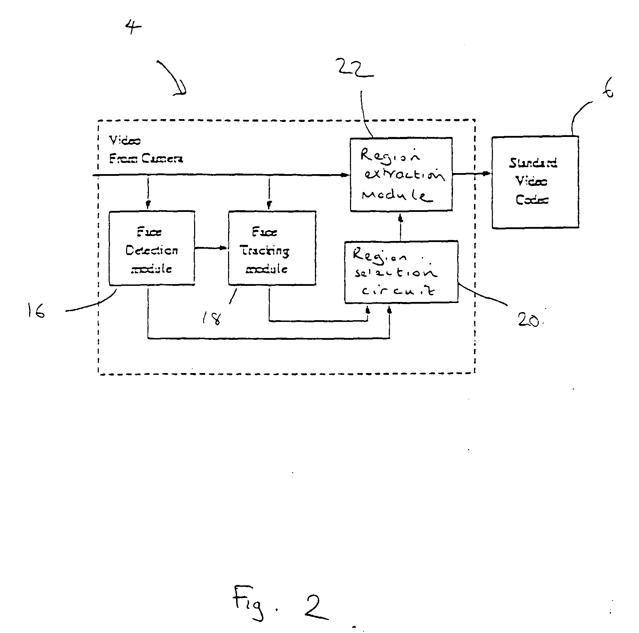

The camera is connected to a signal processor 4 for processing signals received from the camera 2 representing the captured image. The signal processor 4 is shown in more detail in Fig. 2. The signal processor includes a face detection module 16, for detecting the size and position of the face or head in the captured image, a face tracking module 18, for tracking the face as it moves in the image, a region selection circuit 20, for selecting a specific region of the image, and a face region extraction module 22. Face-detection circuits and face tracking circuits are known and described, for example, in G. Burel and D. Carel - Detection and Localisation of faces on digital images, Pattern Recognition Letters, 15:963-967, October 1994 and in Lars-Peter Bala, Kay Talmi and Jin Liu - Automatic Detection and Tracking of Faces and Facial Features in Video Sequences, Picture Coding Symposium 1997, 10-12 September 1997, Berlin Germany, the contents of which are incorporated by reference. The signal processor 4 operates to select and extract a desired region of the image including the face region, as will be described in more detail below.

An output of the signal processor 4 is connected to an encoder 6, for encoding signals representing the extracted region of the image signal. The encoder 6 is a known encoder. The encoder is connected to a transmitter 8, for transmitting the coded signal in a known manner.

The receiving side of the system is a receiving terminal in the form of a second mobile phone (not shown). The second phone includes a known receiver 10 for receiving the transmitted signal, a decoder 12 connected to the receiver for decoding the received signal, and a display 14 for displaying the received image in QCIF format.

In operation, an image is captured by the camera 2, and the resulting signals are input to the signal processor 4. The image is analysed by the face-detection module 16, which determines the position and size of the face within the image in a known manner.

Information regarding the location and size of the face are input from the face-detection module 16 to the region selection circuit 20, which determines the size and location of the window to be selected from the main image. In this embodiment, the region selection circuit 20 is configured to select a window of a predetermined size centred on the face. More specifically, the region selection circuit selects a window having the same resolution as the display. Thus, in this case, the region selection circuit is configured to select a region sized 176x144 pixels, centred on the face region. The centre can be defined and determined in any suitable manner. In this embodiment, the centre of the face is the mid-point based on the extremes vertically and horizontally of the flesh-region.

Because of the set up of the optical system of the camera 2, as explained above, the face region occupies approximately 80% of the selected window (in normal use), that is approximately 100x150 pixels. Thus, in normal operation, assuming the face is in the centre of the CIF image, there is a boundary around the selected region of 126 pixels in the vertical direction and 69 pixels in the horizontal direction. Thus, even if the outline of the face is displaced horizontally or vertically because of head and/or camera movements, it will still be reflected within the CIF image as long as displacement is less than the distances mentioned above. For the above example, the vertical face displacement in the image plane can be 1.26 times the face width. To achieve a similar coverage in a conventional system with QCIF resolution, the width of a face would have to be 50 pixels.

The face region extraction module 22 receives signals from the camera and from the region selection circuit and extracts the window including the face region from the image from the camera. The extracted window is then transferred to the standard QCIF coder 6 for coding using a suitable known coding method. The remainder of the image is discarded. These steps are performed for each frame of the captured video images, the face being tracked by the tracking circuit to reduce the amount of processing required.

As the face-region moves within the captured image, the extracted window also moves around the captured image. Because the face detection module is supported by the face tracking module, it is not necessary to do a full face-detection process in each frame and thus the amount of processing is reduced. Even more importantly, since the tracking module usually uses low-level image features for tracking, such as local image intensity variations or edges, the overall system can achieve good results in stabilising the position of the face (or other objects). It is preferable not to solely rely on object detection (eg pattern-recognition techniques) for tracking and stabilisation of the moving object (say face), because it gives unacceptably poor results. Because the region selection circuit 20 is configured to select the window centred on the face region, and it uses accurate movement information from the tracking region, the face is reliably stabilised within the extracted window. Thus, even if the head moves within the captured image, it does not move within the extracted window. This is less distracting for the viewer.

The coded signal is transmitted, received and decoded by the receiving terminal, which displays the image of the face in QCIF format. Because of the process of selection of a region of the captured image which has the face in the middle of the region and which is of QCIF resolution, the displayed image has the face in the middle and is the correct resolution for the display. Also, the face is displayed as a higher fraction of the image than in the captured image, which gives the impression of better resolution.

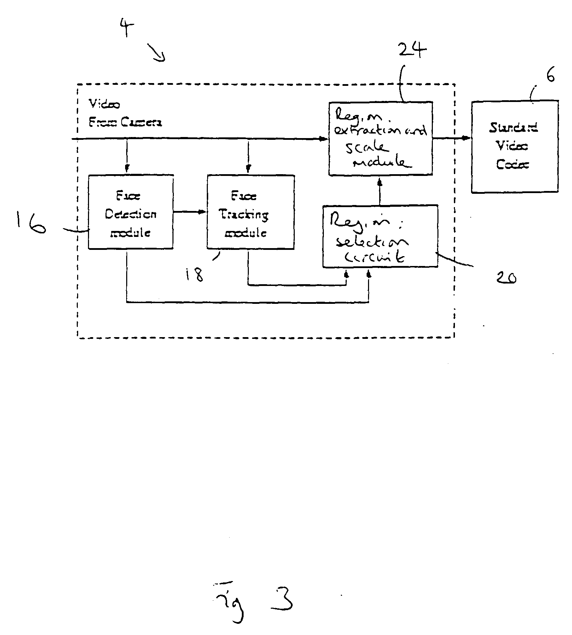

A second embodiment of the invention will be described with reference to Fig. 3. The second embodiment corresponds to the first embodiment but has a region extraction and scale module 24 in place of the region extraction module 22.

In embodiment 2, a region surrounding a face-region is selected as in the first embodiment. However, the extracted region is also scaled to compensate for variations in the size of the face region resulting from movements of the user relatively towards and/or away from the camera. In other words, the extraction and scale module 24 also performs a digital zoom procedure on the extracted region. Scaling is performed so that the fraction of the extracted region occupied by the face region is approximately the same in each successive extracted region. Scaling is based on the information from the tracking module. In this embodiment the tracking module is generalised so that it also provides additional information about the scale of the object. Coding, transmission and display are carried out as in the first embodiment. The second embodiment has the advantage that it results in a more stable image that is less distracting to the viewer.

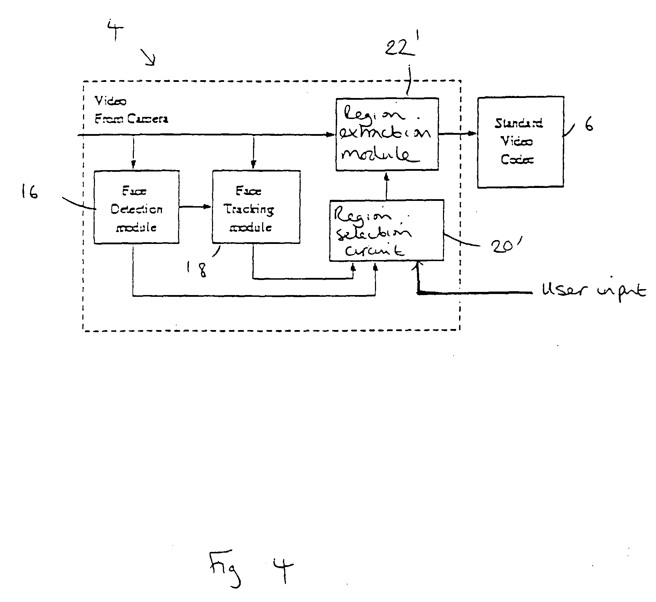

A third embodiment of the invention will be described with reference to Fig. 4.

The third embodiment corresponds to the first or second embodiments, subject to modifications to the region selection circuit and the region extraction module. Also, the region selection circuit 20' has a user input.

In this embodiment, the region selection circuit 20' operates to select a region around the face region such that the face region occupies a predetermined fraction of the selected region. The predetermined fraction is selected by the user by way of the user input, in the form of a keyboard. In an alternative embodiment, the fraction may be fixed by the manufacturer. In this example, it has been selected that the face region occupies 80% of the selected region. In other words, the size of the selected region is 125% of the face region.

The face detection and tracking modules 16, 18 detect and track the face region as in embodiments 1 and 2. The region selection circuit 20' then selects a region around the face region in accordance with the preferences. Here, the region is a rectangular region, scaled in relation to the face region, and centred on the face.

The selected region is then extracted by the region extraction module 22'. The size of the extracted region in pixels is dependent on the size of the face in the captured image, and it may vary, for example, as the head moves closer to or further away from the camera. Thus, the selected region is scaled to a predetermined size in the region extraction module. Here, the region is scaled to QCIF format, so that it can then be coded using a standard QCIF encoder 6. Alternatively, the captured image can be subjected to digital zoom before the face region is extracted so that the size of the face, and hence the size of the extracted region, is the same in each frame.

Subsequently, the coded signal is transmitted and displayed as described above.

The above embodiments have been described in relation to mobile video phone communication. The invention may also be used in other applications, such as in video-conferencing and transmission of video images from cameras connected to personal computers. The embodiments describe selection of a region including the face of a speaker as an object of interest, but the invention can be applied in relation to any other object of interest. The invention has been described using CIF and QCIF, but other formats may be used. References to certain specific formats include modifications, such as rotations, of those formats. For example, QCIF format has a greater width than height (similar to "landscape" configuration in relation to printing on paper). In the context of a person's face, QCIF format rotated by 90°, that is, so it has greater height than width (like "portrait" configuration), is preferable, so that the face occupies a larger proportion of the selected region and less space is allocated to less important parts of the selected region. Similar considerations apply to the choice of the selected and/or displayed region, with reference to the nature, especially shape, of the object of interest, even if the selected and/or displayed region is not in accordance with specific known formats. In embodiment 3, instead of selecting a region that is a certain percentage greater than the face-region, the selected region could be a predetermined amount greater, for example, longer and wider by a certain number of pixels.

## Claims

1. A method of transmitting a video including an object of interest comprising capturing a sequence of images in which the object of interest occupies a fraction of each image, tracking movement of the object of interest and selecting and extracting a region of each image including the object of interest, and coding only the selected region of each captured image.

2. A method as claimed in claim 1 comprising stabilising the object of interest within the extracted region.

3. A method as claimed in claim 2 wherein the extracted region is selected so that the object of interest is centred within the extracted region.

4. A method as claimed in any one of claims 1 to 3 comprising transmitting the coded region, and decoding and displaying the selected region.

5. A method as claimed in claim 4 wherein the extracted region is displayed in a format comprising fewer pixels than the format of the captured image.

6. A method as claimed in any one of claims 1 to 5 in which the object of interest occupies less than a predetermined fraction of each image.

7. A method as claimed in any one of claims 1 to 5 in which the object of interest occupies a small fraction of each image.

8. A method of processing a video including an object of interest in a sequence of images comprising selecting a region of an image including the object of interest, the selected region being of a predetermined size, and coding the selected region.

9. A method as claimed in claim 8 wherein only the selected region is coded and the rest of the captured image is discarded.

10. A method as claimed in any preceding claim wherein the selected region corresponds to a predetermined image format having fewer pixels than the format of the image capture of the camera.

11. A method as claimed in claim 10 wherein the captured image is in CIF format and the selected region is in QCIF format.

12. A method as claimed in any preceding claim wherein the selected region is scaled to compensate for movements of the object of interest backwards and forwards relative to the camera.

13. A method as claimed in any of claims 8 to 12 wherein the object of interest is stabilised within the selected region.

14. A method as claimed in claim 13 wherein the selected region is such so that the object of interest is centred in the selected region.

15. A method of processing a video including an object of interest in a sequence of images comprising selecting a region of an image including the object of interest and which is greater than the area occupied by the object of interest by a predetermined degree, and coding said region.

16. A method as claimed in any preceding claim wherein the object of interest occupies a predetermined percentage of the selected region.

17. A method as claimed in any preceding claim comprising scaling the selected region to a predetermined size.

18. A method as claimed in claim 17 wherein the predetermined size corresponds to a known format.

19. A method as claimed in claim 18 wherein the captured image is in CIF format and the extracted region is scaled to QCIF format.

20. A method of transmitting video images comprising processing video images according to a method as claimed in any one of claims 1 to 19, transmitting the encoded image data, and receiving, decoding and displaying the image data.

21. A method of operating a video camera comprising arranging the camera so that an object of interest occupies a fraction of the area of the captured image, tracking movement of the object of interest within the captured image, selecting and extracting a region of interest around the object of interest and displaying only the extracted part of the captured image.

22. A method as claimed in any preceding claim comprising compensating for changes in size of the object in the sequence of images.

23. An image processing circuit comprising means for extracting a region of each image in a sequence of images including an object of interest and coding only the selected region of each captured image.

24. An image processing circuit comprising means for selecting a region of an image including an object of interest, the selected region being of a predetermined size, and coding the selected region.

25. An image processing circuit comprising means for selecting a region of the image such that the object of interest occupies a predetermined percentage of the region, and for coding said region.

26. A circuit as claimed in any one of claims 23 to 25 comprising means for tracking movement of the object of interest in a sequence of images.

27. A circuit as claimed in any one of claims 23 to 26 comprising means for compensating for changes of size of the object of interest in the sequence of images.

28. A video image processing circuit comprising means for performing a method as claimed in any one of claims 1 to 22.

29. A video image processing device comprising a camera and a circuit as claimed in any one of claims 23 to 28.

30. A mobile phone comprising a circuit as claimed in any one of claims 23 to 28 or a device as claimed in claim 29.
